# EUROPEAN PATENT SPECIFICATION

(11) **EP 4 579 334 B1**
(45) Date of publication and mention of the grant of the patent: **19.08.2026**
(21) Application number: 24216382.2
(22) Date of filing: 29.11.2024
(51) Int. Cl.: G03B 21/10, G03B 21/14, G03B 21/56, B60K 35/00, G03B 21/13

(54) **COCKPIT SYSTEM INCLUDING OPERATING SYSTEM CONFIGURED TO USE PROJECTOR**
COCKPITSYSTEM MIT BETRIEBSSYSTEM MIT KONFIGURATION ZUR VERWENDUNG EINES PROJEKTORS
SYSTÈME DE COCKPIT COMPRENANT UN SYSTÈME D'EXPLOITATION CONFIGURÉ POUR UTILISER UN PROJECTEUR

(30) Priority: 28.12.2023 KR 20230194334
(43) Date of publication of application: 02.07.2025
(73) Proprietor: Hyundai Mobis Co., Ltd., Gangnam-gu Seoul 06141 (KR)
(72) Inventor: LEE, Shin Jik, 16891 Yongin-si (KR); AN, Hyun Jun, 16891 Yongin-si (KR)
(74) Representative: Vossius & Partner Patentanwälte Rechtsanwälte mbB

(56) References cited:
- JP-A- 2017 167 182
- US-A1- 2016 134 848
- US-A1- 2016 161 833
- US-A1- 2019 329 716

## Description

### BACKGROUND

### 1. Field

The present invention relate to a display of a vehicle and/or an unmanned aerial vehicle (UAV), and more particularly to a cockpit system including an operating system using a projector.

### 2. Description of the Related Art

Recently, as vehicles have become digitized, many controllers are installed into the vehicles. Various communication functions between the controllers may allow the vehicle's location to be remotely checked via the Internet or using a smartphone and may enable a user to discover nearby charging stations. All information about a current status of the vehicle, such as a battery charging state or a pre-conditioning state of the vehicle, is checked in real time by a button touch of a user (or driver). In addition, an intelligent driving assistance system acquires information about road driving to make driving more convenient for a driver.

In this regard, a cluster can be used in the vehicle. The cluster may provide the basic functions of the vehicle, for example, a driving speed, a mileage, a tachograph, and an instrument panel function showing an engine speed (engine rpm). For example, the cluster may provide accurate and convenient vehicle information required for charging infrastructure network information, a driving range, a battery current status, information output, and other driving environments.

In particular, vehicles have recently used digital clustering of various digital cockpits to effectively express vehicle information. Therefore, there is a need to develop technology that can handle these digital cockpits in an integrated manner.

Additionally, in recent vehicles, there is a demand for various display types to provide convenience of use for drivers and passengers, and there is a demand for technology that can change the layout of cockpits according to such display types.

US 2016/161833 A1 discloses a head-up display (HUD) device designed to generate a high-quality virtual image at an adjustable distance. JP 2017 167182 A discloses a HUD that creates multiple virtual images at different depths using a single, vibrating screen. US 2019/329716 A1 discloses a hybrid display device that combines two different technologies to clearly display two types of virtual images simultaneously: a long-distance, dynamic image and a short-distance, static image.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The present invention is defined by the appended independent claims, and preferred aspects of the present invention are defined by the appended dependent claims. In a general aspect, here is provided a cockpit system including a projector disposed in a vehicle, the projector being configured to be provided in a cockpit of the vehicle, an operating system configured to display content emitted from the projector, a screen disposed between the projector and the operating system, the screen being configured to receive and display a portion of the content, and a housing disposed between the screen and the projector, the housing being configured to change a position of the screen.

The operating system includes a first lens configured to display first content emitted from the projector and a second lens configured to display second content emitted from the projector.

The second lens includes an image plane on which an operating system screen is displayed from among the content emitted from the projector and a light boundary generated by default light generated from the projector.

The second lens may include a gradation pattern disposed between an edge portion of the image plane and the light boundary.

The gradation pattern may be applied to the image plane using one or more of laser etching, gradation pattern film lamination, and gradation pattern painting.

The screen includes a projection region configured to cover a portion of light emitted from the projector, the second lens enabling light emitted from the projector to be scattered at an edge of the projection region so that a gradation is applied between the image plane and the light boundary.

The second lens may be configured such that a gradation width is determined in response to a change in a distance between the screen and the projector.

As a distance between the second lens and the screen increases, the gradation width may increase and, as the distance between the second lens and the screen decreases, the gradation width may decrease.

In a general aspect, here is provided a method including projecting content from a projector to screen in a vehicle cockpit, the screen being provided within an operating system configured to display images from the content and adjusting the position of the screen and the projector.

The projecting content includes applying first content to a first lens and a second content to a second lens.

The adjusting of the position may include adjusting a distance between the second lens and the screen.

The adjusting of the distance may change a gradation between an image plane and a light boundary.

The second lens may enable light emitted from the projector to be scattered at an edge of a projection region of the screen so that a gradation is applied between an image plane and a light boundary.

The second lens may include an image plane on which an operating system screen is displayed of the content emitted from the projector and a light boundary generated by default light generated from the projector.

A gradation pattern may be disposed between an edge portion of the image plane and the light boundary.

The screen may include a projection region configured to cover a portion of light emitted from the projector.

### BRIEF DESCRIPTION OF THE DRAWINGS

FIGS. 1 and 2 are diagrams illustrating examples of a cockpit system including an operating system using a projector according to an embodiment of the present invention.
FIG. 3 is a diagram illustrating example content of an operating system displayed using a projector according to an embodiment of the present invention.
FIG. 4 is a diagram illustrating an example configuration of an operating system displayed using a projector according to an embodiment of the present invention.
FIG. 5 is a diagram illustrating an example of applying gradation pattern printing to an operating system displayed using a projector.
FIG. 6 is a diagram illustrating a method of applying a gradation according to a screen of the operating system using a projector.
FIG. 7 is a diagram illustrating the gradation effect of the operating system using a projector.

In the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present invention and methods of achieving the advantages and features will be clear with reference to embodiments described in detail below together with the accompanying drawings. However, the present invention is not limited to the embodiments disclosed herein but will be implemented in various forms. The embodiments of the present invention are provided so that the present invention is completely disclosed, and a person with ordinary skill in the art can fully understand the scope of the present invention. The present invention will be defined only by the scope of the appended claims. Meanwhile, the terms used in the present specification are for explaining the embodiments, not for limiting the present invention.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

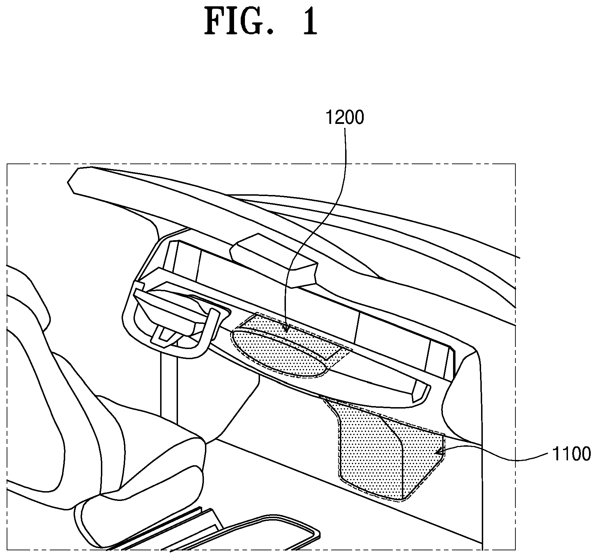

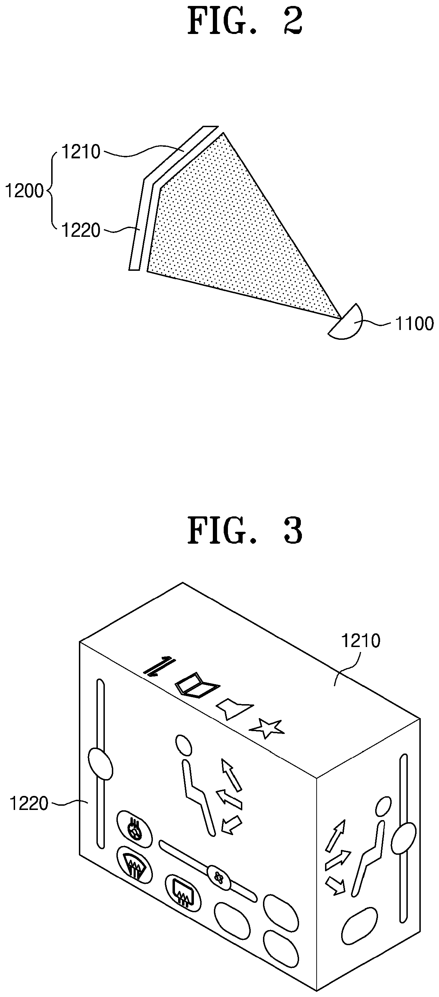

FIGS. 1 and 2 are diagrams illustrating examples of a cockpit system including an operating system using a projector according to an embodiment of the present invention.

FIGS. 1 and 2 illustrate embodiments in which a cockpit system is implemented in a projection manner using an internal projector 1100.

In order to implement a display-type cockpit system, a light-emitting display such as a light emitting diode (LED) display can be used, but there are many curves/curved surfaces in the interior space of a vehicle, such as a car, airplane, boat, UAV, or helicopter, and it is difficult to implement a light-emitting display considering such in-vehicle interior characteristics.

Therefore, the operating system 1200 is configured in a projection manner using the internal projector 1100 of the vehicle, and the operating system 1200 is advantageous in that it can be freely implemented even in a space where many curves/curved surfaces exist as shown in FIG. 2.

The operating system using a projector may enable an image emitted from the projector to be implemented by a multi-faceted operating system. Shortcut-type content may be displayed on a first lens 1210 of the operating system 1200, and HVAC content implemented in an animation manner may be displayed on a second lens 1220 of the operating system 1200.

For example, a lower end 1220 of the operating system may enable images to be projected even on double-curved surfaces, thereby increasing the degree of freedom of a design.

FIG. 3 is a diagram illustrating example content of the operating system displayed using a projector according to an embodiment of the present invention.

Referring to FIG. 3, a first lens 1210 of the operating system 1200 is an application related to user settings, and can output applications such as media, sound, and favorites.

A second lens 1220 of the operating system 1200 can output the driver's driving-related cluster, cluster widget, map, media, and weather-related applications, and the applications can be output according to the driver's (or passenger's) operation or condition settings.

However, the configuration of the display described above is merely an example, and the corresponding regions may be integrated and displayed according to the driver/passenger's operation or condition settings. For example, as will be described later, depending on the display mode, one image integrated into the first lens 120 and the second lens 130 may be displayed.

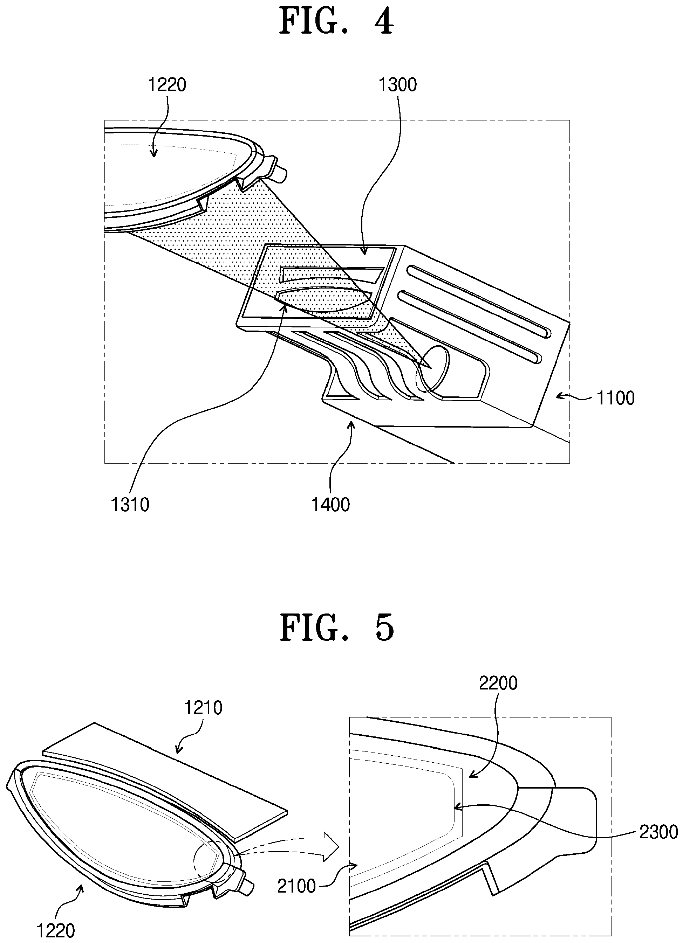

FIG. 4 is a diagram illustrating an example configuration of the operating system displayed using a projector according to an embodiment of the present invention.

Referring to FIG. 4, a cockpit system including the operating system using a projector according to the present invention includes a projector 1100, an operating system 1200, a screen 1300, and a screen housing 1400.

The projector 1100 outputs an image to the second lens 1220 to provide information in the cockpit of the vehicle. The projector 1100 is placed in the in-vehicle cockpit.

The image output from the projector 1100 may be provided to the user through the second lens 1220.

The screen 1300 is disposed between the projector 1100 and the second lens 1220, and a portion of light emitted from the second lens 1220 is scattered using the screen 1300 so that gradation can be applied to the image. The screen 1300 is configured to receive and display some, a portion, or all of the content from the projector. Hereinafter, a method for applying gradation to the image that is output to the second lens 1220 will be described in detail.

The screen 1300 may be disposed between the projector 1100 and the second lens 1220.

The screen 1300 includes a projection region 1310 such that the image of the projector 1100 can be displayed on the second lens 1220 according to the shape and size of the second lens 1220.

Light emitted from the projector 1100 may be scattered at the edge of the projection region of the screen 1300 and displayed as a gradation effect on the image plane of the second lens 1220.

The screen housing 1400 is disposed between the screen 1300 and the projector 1100, and is configured to change the position of the screen 1300.

The screen housing 1400 may serve to fix the screen 1300. The screen housing 1400 may serve to prevent the image emitted from the projector 1100 from leaking outside the desired image plane of the second lens 1220.

FIG. 5 is a diagram illustrating an example of applying gradation pattern printing to the operating system displayed using the projector according to an embodiment of the present invention.

Referring to FIG. 5, the second lens 1220 of the operating system 1200 may include an image plane 2100 on which the image emitted from the projector 1100 is displayed, a light boundary 2200, and a gradation pattern 2300.

The image plane 2100 may be defined as a region where the operating system screen projected on the projector 1100 is located, and the light boundary 2200 may be defined as a region generated by default light generated by the projector 1100.

When the image emitted from the projector 1100 is provided through the second lens 1220, the image output to the light boundary 2200 is not clear in image quality, thereby making the user who views the image feel a sense of heterogeneity

In order to address this issue, the light boundary phenomenon can be alleviated by applying the gradation pattern 2300 to the second lens 1220. The gradation pattern 2300 may be applied between the edge of the image plane 2100 and the light boundary 2200. For example, application of the gradation pattern 2300 may start from inside the light boundary 2200.

For example, the gradation pattern application method may include at least one of laser etching, gradation pattern film lamination, and gradation pattern painting.

As a result, the operating system may apply a gradation pattern to the light boundary displayed on the second lens 1220, and may thus apply gradation for removing the image plane edge and the light boundary to the image.

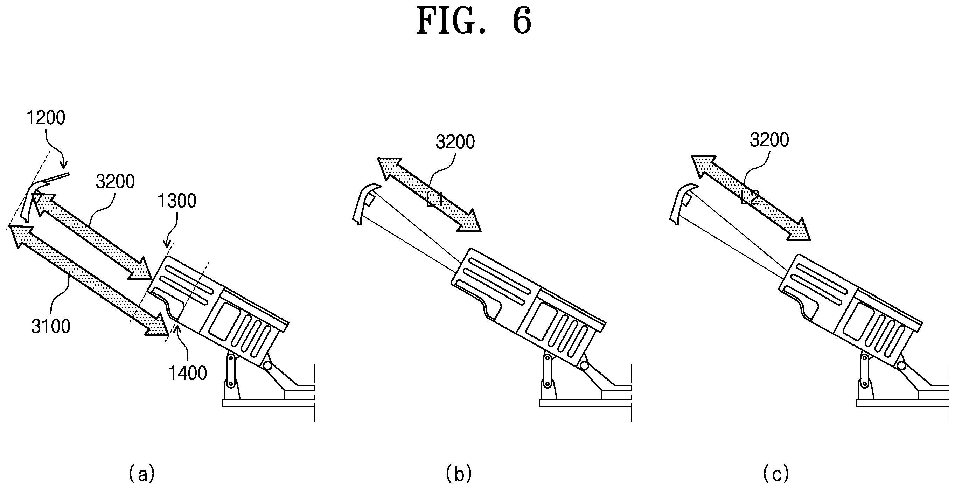

FIG. 6 is a diagram illustrating a method of applying the gradation according to a screen of the operating system using a projector.

Referring to FIG. 6(a), the screen 1300 is disposed between the projector 1100 and the operating system 1200. At this time, the screen 1300 scatters light at the edge of the projection region, and the scattered light applies gradation between the image plane and the light boundary.

At this time, the amount of scattered light varies depending on the distance between the projector 1100, the operating system 1200, and the screen 1300, and the gradation width changes accordingly. At this time, the distance between the operating system 1200 and the projector 1100 is defined as a projection distance, and the distance between the operating system 1200 and the screen 1300 is defined as a gradation screening distance.

The gradation effect can be controlled by changing between the projector 1100, the operating system 1200, and the screen 1300. For example, the cockpit can change the width and opacity of the gradation region by changing the distance of the screen 1300.

For example, an appropriate projection distance 3100 for providing the gradation effect of the operating system may be set to 400 mm, and the gradation screening distance 3200 according to the projection distance 3100 may be set to 250 to 300 mm, without being limited thereto.

FIG. 6(b) shows a state in which the gradation screening distance 3200 is set to L1 in correspondence to the positions of the operating system 1200 and the screen 1300, and FIG. 6(c) shows a state in which the gradation screening distance is set to L2 in correspondence to the positions of the operating system 1200 and the screen 1300. Here, L1 may be set to 250 mm, and L2 may be set to 300 mm.

The screen housing 1400 may change the position of the screen by moving forward and backward, and may thus change the gradation screening distance.

As the gradation screening distance 3200 becomes shorter depending on the position of the screen 1300, the gradation width becomes smaller. As the gradation screening distance 3200 becomes longer, the gradation width becomes larger.

For example, the gradation width when the gradation screening distance is 250 mm becomes smaller than the gradation width when the gradation screening distance 3200 is 300 mm.

As the gradation screening distance becomes longer depending on the position of the screen 1300, the gradation opacity decreases and the gradation becomes blurred, and as the gradation screening distance becomes shorter, the gradation opacity increases and the gradation becomes darker.

For example, the gradation opacity when the gradation screening distance is 300 mm becomes less than the gradation opacity when the gradation screening distance is 250 mm.

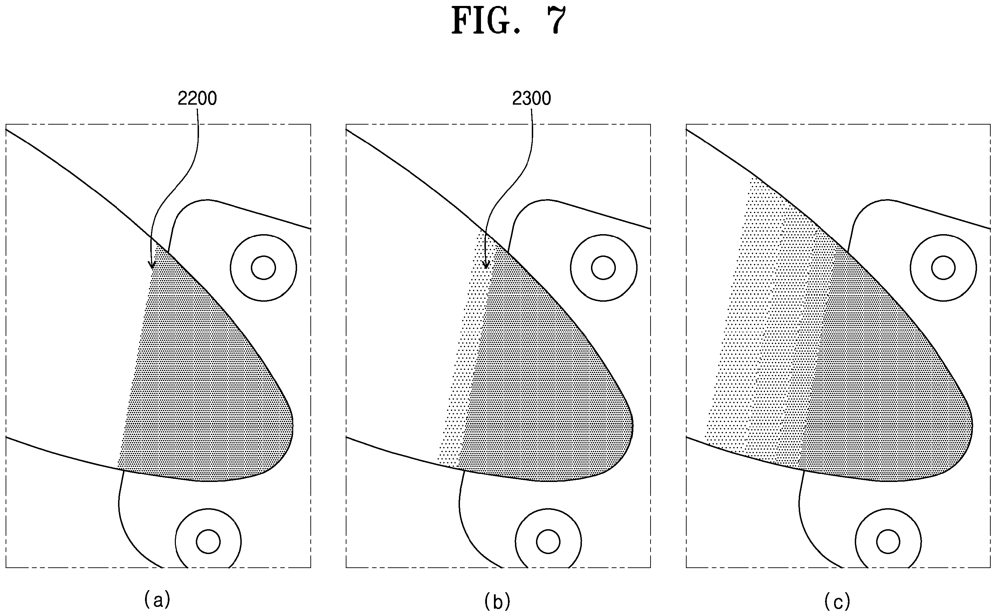

FIG. 7 is a diagram illustrating the gradation effect of the operating system using a projector.

Referring to FIG. 7(a), when light emitted from the projector 1100 is projected onto the operating system 1200, a light boundary 2200 is generated due to default light.

In order to address this issue, when applying the gradation, as shown in FIG. 7(b), when the gradation 2300 is applied to the edge of the image plane of the operating system 1200, the light boundary phenomenon can be alleviated.

In addition, as shown in FIG. 7(c), the cockpit may set the gradation width displayed on the operating system 1200 in response to conditions such as the position of the screening plate, the light screening amount, and the like.

Accordingly, the operating system changes the position of the screen 1300, so that the gradation for removing the image plane edge and the light boundary can be applied to the image.

Various embodiments of the present invention do not list all available combinations but are for describing a representative aspect of the present invention, and descriptions of various embodiments may be applied independently or may be applied through a combination of two or more.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

While this disclosure includes specific examples, it will be apparent after an understanding of the invention of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

## Claims

1. A cockpit system, comprising:
a projector (1100) disposed in a vehicle, the projector (1100) being configured to be provided in a cockpit of the vehicle;
an operating system (1200) configured to display content emitted from the projector (1100);
a screen (1300) disposed between the projector (1100) and the operating system (1200), the screen (1300) being configured to receive and display a portion of the content; and
a housing (1400) disposed between the screen (1300) and the projector (1100), the housing (1400) being configured to change a position of the screen (1300),
wherein the operating system (1200) comprises:
a first lens (1210) configured to display first content emitted from the projector (1100); and
a second lens (1220) configured to display second content emitted from the projector (1100), and
wherein the screen (1300) comprises a projection region (1310) configured to cover a portion of light emitted from the projector (1100) in the manner that light uncovered by the projection region (1310) is projected on the second lens (1220) according to a shape and a size of the second lens (1220).

2. The cockpit system according to claim 1, wherein the second lens (1220) comprises:
an image plane (2100) on which an operating system screen is displayed from among the content emitted from the projector (1100); and
a light boundary (2200) generated by default light generated from the projector (1100).

3. The cockpit system according to claim 2, wherein the second lens (1220) further comprises a gradation pattern (2300) disposed between an edge portion of the image plane (2100) and the light boundary (2200).

4. The cockpit system according to claim 3, wherein the gradation pattern (2300) is applied to the image plane (2100) using one or more of laser etching, gradation pattern film lamination, and gradation pattern painting.

5. The cockpit system according to any one of claims 2 to 4, wherein the second lens (1220) enables light emitted from the projector (1100) to be scattered at an edge of the projection region (1310) so that a gradation is applied between the image plane (2100) and the light boundary (2200).

6. The cockpit system according to claim 5, wherein the second lens (1220) is configured such that a gradation width is determined in response to a change in a distance between the screen (1300) and the projector (1100).

7. The cockpit system according to claim 6, wherein, as a distance between the second lens (1220) and the screen (1300) increases, the gradation width increases, and
wherein, as the distance between the second lens (1220) and the screen (1300) decreases, the gradation width decreases.

8. A method, the method comprising:
projecting content from a projector (1100) to an operating system (1200) through a screen (1300) in a vehicle cockpit; and
adjusting a position of the screen (1300),
wherein said projecting content comprises displaying first content to a first lens (1210) of the operating system (1200) and a second content to a second lens (1220) of the operating system (1200), and
wherein said projecting content further comprises covering, by a projection region (1310) of the screen (1300), a portion of light emitted from the projector (1100) in the manner that light uncovered by the projection region (1310) is projected on the second lens (1220) according to a shape and a size of the second lens (1220) .

9. The method of claim 8, wherein the adjusting of the position further comprises adjusting a distance between the second lens (1220) and the screen (1300), and
wherein the adjusting of the distance changes a gradation between an image plane and a light boundary (2200).

10. The method of any one of claims 8 to 9, wherein the second lens (1220) enables light emitted from the projector (1100) to be scattered at an edge of a projection region (1310) of the screen (1300) so that a gradation is applied between an image plane (2100) and a light boundary (2200).

11. The method of claim 10, wherein the second lens (1220) comprises:
an image plane (2100) on which an operating system screen is displayed of the content emitted from the projector (1100); and
a light boundary (2200) generated by default light generated from the projector (1100).

12. The method of claim 11, wherein a gradation pattern (2300) is disposed between an edge portion of the image plane (2100) and the light boundary (2200).

## Patentansprüche

1. Cockpit-System, aufweisend:
einen Projektor (1100), der in einem Fahrzeug angeordnet ist, wobei der Projektor (1100) konfiguriert ist, um in einem Cockpit des Fahrzeugs bereitgestellt zu werden;
ein Betriebssystem (1200), das konfiguriert ist, um einen von dem Projektor (1100) emittierten Inhalt anzuzeigen;
einen Bildschirm (1300), der zwischen dem Projektor (1100) und dem Betriebssystem (1200) angeordnet ist, wobei der Bildschirm (1300) konfiguriert ist, um einen Abschnitt des Inhalts zu empfangen und anzuzeigen; und
ein Gehäuse (1400), das zwischen dem Bildschirm (1300) und dem Projektor (1100) angeordnet ist, wobei das Gehäuse (1400) konfiguriert ist, um eine Position des Bildschirms (1300) zu verändern,
wobei das Betriebssystem (1200) aufweist:
eine erste Linse (1210), die konfiguriert ist, um einen von dem Projektor (1100) emittierten ersten Inhalt anzuzeigen; und
eine zweite Linse (1220), die konfiguriert ist, um einen von dem Projektor (1100) emittierten zweiten Inhalt anzuzeigen, und
wobei der Bildschirm (1300) einen Projektionsbereich (1310) aufweist, der konfiguriert ist, um einen Abschnitt eines von dem Projektor (1100) emittierten Lichts in der Weise abzudecken, dass das durch den Projektionsbereich (1310) nicht abgedeckte Licht entsprechend einer Form und einer Größe der zweiten Linse (1220) auf die zweite Linse (1220) projiziert wird.

2. Cockpit-System nach Anspruch 1, wobei die zweite Linse (1220) aufweist:
eine Bildebene (2100), auf der ein Betriebssystembildschirm aus dem von dem Projektor (1100) emittierten Inhalt angezeigt wird; und
eine Lichtgrenze (2200), die durch ein von dem Projektor (1100) erzeugtes Standardlicht erzeugt wird.

3. Cockpit-System nach Anspruch 2, wobei die zweite Linse (1220) ferner ein Gradationsmuster (2300) aufweist, das zwischen einem Randabschnitt der Bildebene (2100) und der Lichtgrenze (2200) angeordnet ist.

4. Cockpit-System nach Anspruch 3, wobei das Gradationsmuster (2300) unter Verwendung eines oder mehrerer von Laserätzen, Gradationsmusterfolienlaminierung und Gradationsmusterlackierung auf die Bildebene (2100) aufgebracht wird.

5. Cockpit-System nach einem der Ansprüche 2 bis 4, wobei die zweite Linse (1220) es ermöglicht, dass von dem Projektor (1100) emittiertes Licht an einem Rand des Projektionsbereichs (1310) gestreut wird, sodass zwischen der Bildebene (2100) und der Lichtgrenze (2200) eine Gradation aufgebracht wird.

6. Cockpit-System nach Anspruch 5, wobei die zweite Linse (1220) derart konfiguriert ist, dass eine Gradationsbreite als Reaktion auf eine Änderung einer Distanz zwischen dem Bildschirm (1300) und dem Projektor (1100) bestimmt wird.

7. Cockpit-System nach Anspruch 6, wobei die Gradationsbreite mit zunehmender Distanz zwischen der zweiten Linse (1220) und dem Bildschirm (1300) zunimmt und wobei die Gradationsbreite mit abnehmender Distanz zwischen der zweiten Linse (1220) und dem Bildschirm (1300) abnimmt.

8. Verfahren, das Verfahren aufweisend:
Projizieren von Inhalt von einem Projektor (1100) zu einem Betriebssystem (1200) über einen Bildschirm (1300) in einem Fahrzeug-Cockpit; und
Einstellen einer Position des Bildschirms (1300),
wobei das Projizieren von Inhalt ein Anzeigen eines ersten Inhalts an einer ersten Linse (1210) des Betriebssystems (1200) und eines zweiten Inhalts an einer zweiten Linse (1220) des Betriebssystems (1200) aufweist, und
wobei das Projizieren von Inhalt ferner ein Abdecken eines Abschnitts des von dem Projektor (1100) emittierten Lichts durch einen Projektionsbereich (1310) des Bildschirms (1300) in der Weise aufweist, dass das durch den Projektionsbereich (1310) nicht abgedeckte Licht entsprechend einer Form und einer Größe der zweiten Linse (1220) auf die zweite Linse (1220) projiziert wird.

9. Verfahren nach Anspruch 8, wobei das Einstellen der Position ferner das Einstellen einer Distanz zwischen der zweiten Linse (1220) und dem Bildschirm (1300) aufweist, und
wobei das Einstellen der Distanz eine Gradation zwischen einer Bildebene und einer Lichtgrenze (2200) verändert.

10. Verfahren nach einem der Ansprüche 8 bis 9, wobei die zweite Linse (1220) es ermöglicht, dass von dem Projektor (1100) emittiertes Licht an einem Rand eines Projektionsbereichs (1310) des Bildschirms (1300) gestreut wird, sodass zwischen einer Bildebene (2100) und einer Lichtgrenze (2200) eine Gradation aufgebracht wird.

11. Verfahren nach Anspruch 10, wobei die zweite Linse (1220) aufweist:
eine Bildebene (2100), auf der ein Betriebssystembildschirm mit dem von dem Projektor (1100) emittierten Inhalt angezeigt wird; und
eine Lichtgrenze (2200), die durch das von dem Projektor (1100) erzeugte Standardlicht erzeugt wird.

12. Verfahren nach Anspruch 11, wobei ein Gradationsmuster (2300) zwischen einem Randabschnitt der Bildebene (2100) und der Lichtgrenze (2200) angeordnet ist.

## Revendications

1. Système de poste de pilotage, comprenant :
un projecteur (1100) disposé dans un véhicule, le projecteur (1100) étant conçu pour être placé dans un poste de pilotage du véhicule ;
un système d'exploitation (1200) configuré pour afficher un contenu émis par le projecteur (1100) ;
un écran (1300) disposé entre le projecteur (1100) et le système d'exploitation (1200), l'écran (1300) étant configuré pour recevoir et afficher une partie du contenu ; et
un boîtier (1400) disposé entre l'écran (1300) et le projecteur (1100), le boîtier (1400) étant conçu pour modifier une position de l'écran (1300),
dans lequel le système d'exploitation (1200) comprend :
un premier objectif (1210) configuré pour afficher un premier contenu émis par le projecteur (1100) ; et
un second objectif (1220) configuré pour afficher un second contenu émis par le projecteur (1100), et
dans lequel l'écran (1300) comprend une région de projection (1310) conçue pour recouvrir une partie d'une lumière émise par le projecteur (1100) de sorte que de la lumière non couverte par la région de projection (1310) est projetée sur le second objectif (1220) selon une forme et une taille du second objectif (1220).

2. Système de poste de pilotage selon la revendication 1, dans lequel le second objectif (1220) comprend :
un plan d'image (2100) sur lequel un écran de système d'exploitation est affiché parmi le contenu émis par le projecteur (1100) ; et
une limite de lumière (2200) générée par de la lumière par défaut générée par le projecteur (1100).

3. Système de poste de pilotage selon la revendication 2, dans lequel le second objectif (1220) comprend en outre un motif de gradation (2300) disposé entre une partie de bord du plan d'image (2100) et la limite de lumière (2200).

4. Système de poste de pilotage selon la revendication 3, dans lequel le motif de gradation (2300) est appliqué au plan d'image (2100) à l'aide d'un ou de plusieurs parmi gravure laser, laminage de film à motif de gradation, et peinture de motif de gradation.

5. Système de poste de pilotage selon l'une quelconque des revendications 2 à 4, dans lequel le second objectif (1220) permet à de la lumière émise par le projecteur (1100) d'être diffusée au niveau d'un bord de la région de projection (1310) de sorte qu'une gradation est appliquée entre le plan d'image (2100) et la limite de lumière (2200).

6. Système de poste de pilotage selon la revendication 5, dans lequel le second objectif (1220) est configuré de telle sorte qu'une largeur de gradation est déterminée en réponse à une modification d'une distance entre l'écran (1300) et le projecteur (1100).

7. Système de poste de pilotage selon la revendication 6, dans lequel, à mesure qu'une distance entre le second objectif (1220) et l'écran (1300) augmente, la largeur de gradation augmente, et dans lequel, à mesure que la distance entre le second objectif (1220) et l'écran (1300) diminue, la largeur de gradation diminue.

8. Procédé, le procédé comprenant :
la projection d'un contenu par un projecteur (1100) vers un système d'exploitation (1200) par le biais d'un écran (1300) dans un poste de pilotage de véhicule ; et
l'ajustement d'une position de l'écran (1300),
dans lequel ledit contenu de projection comprend l'affichage d'un premier contenu vers un premier objectif (1210) du système d'exploitation (1200) et d'un second contenu vers un second objectif (1220) du système d'exploitation (1200), et
dans lequel ledit contenu de projection comprend en outre le recouvrement, par une région de projection (1310) de l'écran (1300), d'une partie d'une lumière émise par le projecteur (1100) de sorte que de la lumière non couverte par la région de projection (1310) est projetée sur le second objectif (1220) selon une forme et une taille du second objectif (1220).

9. Procédé selon la revendication 8, dans lequel l'ajustement de la position comprend en outre l'ajustement d'une distance entre le second objectif (1220) et l'écran (1300), et
dans lequel l'ajustement de la distance modifie une gradation entre un plan d'image et une limite de lumière (2200).

10. Procédé selon l'une quelconque des revendications 8 à 9, dans lequel le second objectif (1220) permet à de la lumière émise par le projecteur (1100) d'être diffusée au niveau d'un bord d'une région de projection (1310) de l'écran (1300) de sorte qu'une gradation est appliquée entre un plan d'image (2100) et une limite de lumière (2200).

11. Procédé selon la revendication 10, dans lequel le second objectif (1220) comprend :
un plan d'image (2100) sur lequel est affiché un écran de système d'exploitation du contenu émis par le projecteur (1100) ; et
une limite de lumière (2200) générée par de la lumière par défaut générée par le projecteur (1100).

12. Procédé selon la revendication 11, dans lequel un motif de gradation (2300) est disposé entre une partie de bord du plan d'image (2100) et la limite de lumière (2200).
